# EUROPÄISCHE PATENTSCHRIFT

(11) **EP 2 743 063 B1**
(45) Veröffentlichungstag und Bekanntmachung des Hinweises auf die Patenterteilung: **03.06.2015**
(21) Anmeldenummer: 12197013.1
(22) Anmeldetag: 13.12.2012
(51) Int. Cl.: B29C 70/08, B29C 70/86

(54) **Strukturintegrierte Verstärkung in gewickelten Bauteilen aus Verbundwerkstoffen**
Structurally integrated reinforcement in wound components made of composite materials
Renforcement intégré à la structure dans des composants enroulés à base de matières composites

(43) Veröffentlichungstag der Anmeldung: 18.06.2014
(73) Patentinhaber: Enrichment Technology Company Ltd. Zweigniederlassung Deutschland, 52409 Jülich (DE)
(72) Erfinder: Sonnen, Michael, 47259 Duisburg (DE); Otremba, Frank, 52223 Stolberg (DE)
(74) Vertreter: Jostarndt, Hans-Dieter

(56) Entgegenhaltungen:
- DE-A1-102007 018 082
- JP-A- S59 133 813
- KR-A- 20120 047 713

## Beschreibung

### Gebiet der Erfindung

Die Erfindung bezieht sich auf ein Bauteil, umfassend Faserverbundmaterialien mit Verstärkungsbereichen, auf einen entsprechenden Rotationskörper im Fall eines drehenden Bauteils und auf ein Verfahren zur Herstellung dieser Bauteile.

### Hintergrund der Erfindung

Bei Bauteilen kommt es an Verbindungsstellen zu den Antrieben oder zu den statischen Belastungspunkten, beispielsweise in der Komponentenkette Welle-Nabe-Felge, durch Steifigkeits- und/oder Dichteunterschiede zu zusätzlichen Belastungen. Diese zusätzlichen Belastungen (statisch oder dynamisch) können zum Versagen des Bauteils beziehungsweise zu einer Verminderung der Belastbarkeit gegenüber Krafteinleitungen und damit zu einer verminderten Effizienz oder Leistungsfähigkeit des Bauteils führen.

Um diese negativen Einflüsse auf die Bauteile zu vermindern oder zu beseitigen wird versucht, die Belastung üblicherweise durch außenliegende Verstärkungen abzufangen. Solche außenliegenden Verstärkungen werden beispielsweise in Form eines Rings um die zu verstärkenden Bereiche angebracht. Durch den relativ großen Abstand zwischen außenliegender Verstärkung und Belastungseinleitung werden die dazwischenliegenden Bereiche trotzdem höher belastet. Die Belastung kann durch die außenliegende Verstärkung nie vollständig kompensiert werden. Außerdem ist zusätzliches Verstärkungsmaterial erforderlich, was den Materialbedarf für das gesamte Bauteil erhöht. Durch die äußere Verstärkung wird das Bauteil außen verdickt, was den für den späteren Einsatz erforderlichen Bauraum um das Bauteil herum vergrößert. Anlagen mit solchen Bauteilen können nicht so kompakt gebaut werden wie es ohne die äußere Verstärkung möglich wäre. Zusätzlich führt eine solche außenliegende Verstärkung bei Bauteilen aus Faserverbundwerkstoffen zu Eigenspannungen im darunterliegenden Laminat, die eine Delamination begünstigen. Bei einer Verstärkung aus Faserverbundwerkstoff können sich Faserenden an der Bauteiloberfläche der Verstärkung im Betrieb lösen. Es könnten zwar alternativ andere Materialien als Materialien mit Fasern als Verstärkung eingesetzt werden. Allerdings sind Faserverbundwerkstoffe aufgrund ihrer Materialeigenschaften und Herstellungskosten stark gegenüber anderen Materialien, beispielsweise Metallverstärkungen, bevorzugt.

KR 2012/0047713 A offenbart einen Propellerschaft für ein Fahrzeug mit einer Oberflächenschicht aus Glasfibermaterial für eine verbesserte Stoßwiderstandsfähigkeit. Hierbei wird ein Bündel von Glasfasermaterial in einem Matrixmaterial um die Enden eines Dorns zum Herstellen der Enden einer Röhre gewickelt. Ein Bündel von Carbonfasern in einem Matrixmaterial wird außerdem um den gesamten Dorn gewickelt, um eine Röhre zu bilden. Die Röhre wird anschließend ausgehärtet. Die Merkmale des Oberbegriffs des Anspruchs 1 werden durch diesem Dokument offenbart.

DE 10 2007 018082 A1 offenbart eine Transmissionswelle aus Faserverbundwerkstoffen, insbesondere zum Antrieb der Flügelklappen eines Flugzeugs, mit einer oder mehreren Kohlefaser-Lagen und einer oder mehreren Glasfaser-Lagen sowie ein Flugzeug mit einer solchen Transmissionswelle. Der Schichtaufbau aus äußeren Kohlefasern und einer oder mehreren inneren Glasfaserlagen erweist sich dabei als besonders schlagbeständig.

### Zusammenfassung der Erfindung

Es ist eine Aufgabe der vorliegenden Erfindung, ein Bauteil mit platzsparenden verstärkten Bereichen bereitzustellen, das die Belastungen des Bauteils im Betrieb kompensieren kann und das eine hohe Lebensdauer besitzt.

Diese Aufgabe wird gelöst durch ein Bauteil mit einem Faserverbundbereich aus Faserverbundmaterialien, der ein oder mehrere Normalbereiche mit ein oder mehreren ersten Fasern mit einer ersten mechanischen Belastbarkeit und ein oder mehrere Verstärkungsbereiche mit einer oder mehreren Verbindungsflächen umfasst, die zur Verbindung mit einer jeweiligen Kraftübertragungskomponente zur Krafteinleitung in das Bauteils vorgesehen sind und die Verstärkungsbereiche zur Verstärkung eine oder mehrere zweite Fasern mit einer gegenüber den ersten Fasern höheren zweiten mechanischen Belastbarkeit umfassen, wobei der Faserverbundbereich mehrere Faserlagen aus den ersten und zweiten Fasern umfasst, wobei in derselben Faserlage erste Fasern zumindest in dem Normalbereich und zweite Fasern in dem Verstärkungsbereich neben den ersten Fasern gewickelt sind.

Durch den erfindungsgemäßen Aufbau der Verstärkung der Verstärkungsbereiche wird die Verstärkung in das Bauteil integriert und kann damit die zusätzliche Belastung bei geeigneter Auslegung vollständig abfangen und damit kompensieren. Die integrierte Verstärkung erfordert keinen zusätzlichen Bauraum und ist damit platzsparend. Dadurch ist die integrierte Verstärkung auch direkt in dem Bereich angeordnet, in dem die Belastung eingeleitet wird. Somit wird die Belastung direkt am Ort ihrer Entstehung abgefangen. Somit bleibt das ursprüngliche Bauvolumen des Bauteils erhalten, und anwendungsabhängige Ummantelungen oder Umschließungen können kompakt ausgeführt werden. Zusätzlich ist nur ein Minimum an Verstärkungsmaterial erforderlich. Insbesondere wird kein zum Bauteil hinzuzufügendes Verstärkungsmaterial benötigt. Dies macht die integrierte Verstärkung wirtschaftlicher.

Das erfindungsgemäße Bauteil bezieht sich dabei auf jedes Bauteil; das zur Aufnahme einer Krafteinleitung durch eine Kraftübertragungskomponente in das Bauteil vorgesehen ist. Die Belastungen (Krafteinleitungen), die auf das erfindungsgemäße Bauteil ausgeübt werden, können beispielsweise statische oder dynamische Belastung sein. Statische Belastung sind beispielsweise Belastungen infolge einer Zugbelastung, einer Torsionsbelastung, einer Drehmomentbelastung, denen das Bauteil auf statische Weise entgegenwirken soll. In statischem Fall wird das Bauteil oder die Kraftübertragungskomponente nicht durch einen Antrieb bewegt. Beispielsweise wird eine Torsionsbelastung auf das Bauteil ausgeübt, die das Bauteil ohne Eigendrehung beziehungsweise Positionsänderung abfangen soll. Dynamische Belastungen sind beispielsweise Zugbelastung, eine Torsionsbelastung, eine Drehmomentbelastung, die zeitlich variierend auftreten und/oder das Bauteil in einer vorgesehenen Weise physikalisch bewegen. Daher ist das Bauteil dazu vorgesehen, mit einer Kraftübertragungskomponente an einen solchen Antrieb angekoppelt zu werden. Der Antrieb kann das Bauteil beispielsweise in eine laterale oder rotierende Bewegung versetzen. Beispiele für solche dynamischen Belastungen sind unter anderem die lineare Bewegung des Bauteil in eine Bewegungsrichtung zum Schieben oder Ziehen einer Last oder die Änderung oder Aurechterhaltung einer Rotationsfrequenz für ein entlang einer Drehachse drehendes Bauteil, wobei das Bauteil dazu geeignet ist, zur Drehung angetrieben zu werden. Der Antrieb kann hier je nach Anwendung des Bauteils vom Fachmann geeignet gewählt werden. Beispielsweise sind die Antriebe pneumatisch, hydraulisch, elektrisch oder in anderer Weise geeignet ausgeführt. In einer Ausführungsform ist das Bauteil zur Verwendung als ein entlang einer Drehachse drehendes Bauteil vorgesehen und besitzt eine hohlzylindrische Form mit der Zylinderachse als Drehachse, wobei die Zylinderinnenseite zur Verbindung mit der oder den Kraftübertragungskomponenten vorgesehen ist. Bei einem Bauteil als Hohlzylinder kann eine dafür geeignete Kraftübertragungskomponente eine Nabe sein, die innerhalb des Hohlzylinders angeordnet und mit diesem fest verbunden ist. Sofern die Kraftübertragungskomponente mit einer Welle verbunden ist, wird die Kraft (Drehung) der Welle über die entsprechend mitdrehende Kraftübertragungskomponente über die innenseitige Verbindung mit dem Bauteil auf das Bauteil übertragen, was dieses dann ebenfalls in Rotation versetzt.

Der Faserverbundbereich bezeichnet einen Bereich oder Volumen des Bauteils, das aus Faserverbundmaterialien hergestellt ist. Ein solches Faserverbundmaterial besteht im Allgemeinen aus zwei Hauptkomponenten, hier aus Fasern, eingebettet in einem Matrixmaterial, das den festen Verbund zwischen den Fasern herstellt. Der Faserverbundbereich kann dabei aus einer Faser oder aus mehreren Fasern gewickelt werden, wobei die Faser(n) in Kontakt zueinander eng nebeneinander gewickelt werden. Dadurch entsteht eine Faserlage, auf die die Fasern in weiteren Faserlagen gewickelt werden, bis der Faserverbundbereich die gewünschte Dicke besitzt. Durch den Verbund erhält das Faserverbundmaterial höherwertige Eigenschaften, wie beispielsweise eine höhere Festigkeit als jede der beiden einzelnen beteiligten Komponenten liefern könnte. Die Verstärkungswirkung der Fasern in Faserrichtung tritt dabei ein, wenn das Elastizitätsmodul der Faser in Längsrichtung größer ist als das Elastizitätsmodul des Matrixmaterials, wenn die Bruchdehnung des Matrixmaterials größer ist als die Bruchdehung der Fasern und wenn die Bruchfestigkeit der Fasern größer ist als die Bruchfestigkeit des Matrixmaterials. Als Fasern können Fasern aller Art beispielsweise Glasfasern, Kohlenstofffasern, Keramikfasern, Stahlfasern, Naturfasern oder synthetische Fasern verwendet werden. Als Matrixmaterialien können beispielsweise Duromere, Elastomere, Thermoplaste oder keramische Materialien verwendet werden. Die Materialeigenschaften der Fasern und Matrixmaterialien sind dem Fachmann bekannt, so dass der Fachmann eine geeignete Kombination aus ersten Fasern und Matrixmaterialien zur Herstellung eines Faserverbundbereiches als Normalbereich in einem Bauteil für die jeweilige Anwendung auswählen kann. Hierbei kann der Normalbereich im Faserverbundbereich eine einzelne Faser oder mehrere gleiche oder unterschiedliche erste Fasern mit ähnlichen mechanischen Eigenschaften umfassen. In einer Ausführungsform ist das Bauteil vollständig aus Faserverbundmaterial hergestellt. Ein solches Bauteil weist die höchsten Festigkeiten bei geringem Gewicht auf.

Der Normalbereich bezeichnet dabei den Bereich des Bauteils, in der das Faserverbundmaterial auf die normale Belastung des Bauteils ohne Lasteinleitung ausgelegt ist. Daher können in diesem Normalbereich erste Fasern mit einer ersten mechanischen Belastbarkeit, die der Normalbelastung entspricht, verwendet werden.

Im Verstärkungsbereich tritt durch die Krafteinleitung durch die Kraftübertragungskomponente eine lokale erhöhte Belastung auf. Zur Verstärkung gegenüber den Normalbereichen wird im Verstärkungsbereich eine zweite Faser (alleine oder zusätzlich zu der ersten Faser) mit einer gegenüber den ersten Fasern höheren zweiten mechanischen Belastbarkeit integriert. Daher werden als zweite Fasern gegenüber den ersten Fasern hochwertigere Fasern verwendet. Welche dies in der jeweiligen Anwendung sind, hängt unter anderem auch von der Wahl der ersten Faser ab. Der Verstärkungsbereich kann dabei eine einzelne zweite Faser oder mehrere zweite gleiche Fasern oder unterschiedliche zweite Fasern mit ähnlichen mechanischen Eigenschaften umfassen. In einer Ausführungsform sind die ersten und zweiten Fasern ein oder mehrere Elemente aus der Gruppe Naturfasern, sythetische Fasern, keramische Fasern, Glasfasern, Kohlenstofffasern, belastbarere Kohlenstofffasern. Die einzelnen Fasergruppen können je nach Ausführungsform unterschiedliche mechanische Belastbarkeiten besitzen, so dass die voranstehende Reihenfolge nicht unbedingt der Reihenfolge der mechanischen Belastbarkeiten von wenig zu mehr belastbaren Fasern entsprechen muss. Im Rahmen der vorliegenden Erfindung kann der Fachmann geeignete Paarung aus ersten und zweiten Fasern aus obigen Fasertypen auswählen. In einem Beispiel könnten Kombinationen aus Naturfaser - Glasfaser oder Glasfaser - Kohlenstofffaser oder Kohlenstofffaser - belastbareren Kohlenstofffaser als erste und zweite Fasern verwendet werden. Der Fachmann kann im Rahmen der vorliegenden Erfindung auch andere geeignete Kombination aus ersten und zweiten Fasern wählen.

Durch die Integration der Verstärkung als Verstärkungsbereich mit zweiten Fasern in das Bauteil wird verhindert, dass ein Faserende durch die Verstärkung an der Bauteiloberfläche freiliegt (wie es im Stand der Technik bei äußeren Verstärkungen aus Faserverbundmaterial der Fall sein kann). Somit kann sich bei dem erfindungsgemäß verstärkten Bauteil kein Faserende im Verstärkungsbereich im Betrieb lösen. Außerdem verringert die integrierte Verstärkung die Rissneigung im Bauteil.

In einer Ausführungsform besitzt der Verstärkungsbereich eine Ausdehnung, die über eine Ausdehnung der Verbindungsfläche hinausgeht, innerhalb der die Kraftübertragungskomponente mit dem Bauteil verbunden ist. Dadurch wird eine Rissneigung gerade im Bereich der Verbindungsfläche zwischen Kraftübertragungskomponente und Bauteil stark verringert.

In einer weiteren Ausführungsform umfasst der Faserverbundbereich mehrere Faserlagen aus übereinander gewickelten Fasern, wobei die Faserlagen im Normalbereich aus ersten Fasern und im Verstärkungsbereich jeweils abwechselnd aus ersten und zweiten Fasern bestehen. Dadurch wird der Verbund zwischen den Normalbereichen und den Verstärkungsbereichen weiter erhöht, da jede zweite Faserlage aus ersten Fasern besteht, die als durchgehende Faserlage gewickelt werden kann und somit einen starken Verbund mit den sich dazwischen befindlichen zweiten Faser im Verstärkungsbereich herstellt. Die auf diese Weise integrierte Verstärkung reduziert die zu Delaminationen eventuell führenden Eigenspannungen im Bauteil.

In einer weiteren Ausführungsform besitzen die Faserlagen aus zweiten Fasern eine jeweilige erste Ausdehnung parallel zur Verbindungsfläche des Bauteils, wobei sich die ersten Ausdehungen mit wachsendem Abstand der jeweiligen Faserlagen zur Verbindungsfläche verringern. Die Faserlage des Verstärkungsbereichs in der Nähe der Verbindungsfläche zur Kraftübertragungskomponente muss die größten Kräfte auf das Bauteil auffangen. Daher ist es zweckmäßig, die Ausdehnung dieser Faserlage möglichst groß zu wählen. Mit steigendem Abstand zur Verbindungsfläche nimmt die in die jeweiligen Faserlagen eingeleitete Kraft ab, so dass die erste Ausdehnung der Faserlagen mit zweiten Fasern mit wachsendem Abstand abnehmen kann und gleichzeitig die auftretenden Belastungen weiterhin vom verstärkten Bauteil kompensiert werden können. Im Ausführungsbeispiel drehender Bauteile besitzen die Faserlagen aus zweiten Fasern eine jeweilige erste Ausdehnung parallel zur Drehachse des Bauteils. In einer bevorzugten Ausführungsform sind die Faserlagen der zweiten Fasern im seitlichen Schnitt des Verstärkungsbereichs in einer trapezartigen Form übereinander angeordnet, wobei die unterste Faserlage der zweiten Fasern die größte erste Ausdehung besitzt. Diese spezielle verjüngende Form verleiht dem Bauteil weiterhin eine große Robustheit gegenüber Belastungen, wobei der Materialeinsatz höherwertiger zweiter Fasern deutlich verringert werden kann. Die Steilheit der Trapezform an den sich verjüngenden Schenkeln kann auf die jeweilige Anwendung angepasst werden.

In einer weiteren Ausführungsform ist die Anordnung der zweiten Fasern im Verstärkungsbereich so gestaltet, dass die geometrische Form des Faserverbundbereichs im Verstärkungsbereich nicht von der geometrischen Form des benachbarten Normalbereichs abweicht, wobei der Verstärkungsbereich vorzugsweise dieselbe Dicke wie der oder die angrenzenden Normalbereiche besitzt. Durch die mittels der zweiten Fasern in die bestehenden Faserlagen integrierte Verstärkung kann jegliche Vergrößerung des Durchmessers des Bauteils im Verstärkungsbereich vermieden werden, wodurch die erfindungsgemäßen Bauteile mit idealem (nicht durch verstärkende Maßnahmen vergrößerten) Bauvolumen bereitgestellt werden können.

In einer weiteren Ausführungsform können zumindest an den Oberflächen des Bauteils, die zu der Verbindungsfläche hinweisen und/oder wegweisen, im Verstärkungsbereich erste Fasern angeordnet sein. Dadurch wird die integrierte Verstärkung nach außen unsichtbar, da sich die jeweils an den Oberflächen befindlichen Faserlagen zwischen Normalbereich und Verstärkungsbereich nicht unterscheiden. Somit weist das Bauteil nach außen über den gesamten Faserverbundbereich die gleichen Oberflächeneigenschaften auf. Dies ist insbesondere für Anwendungen des Bauteils als Transportwalze für entsprechende zu transportierende Objekte vorteilhaft. Solche Transportwalzen werden beispielsweise in Druckmaschinen verwendet.

In einer weiteren Ausführungsform sind die ersten Fasern mit einem mittleren ersten Faserwinkel zur Richtung der Krafteinleitung in das Bauteils und die zweiten Fasern mit einem mittleren zweiten Faserwinkel zur Richtung der Krafteinleitung in das Bauteil angeordnet, wobei der zweite mittlere Faserwinkel kleiner als der erste mittlere Faserwinkel ist. Durch die günstige Gestaltung des Faserwinkels im Verstärkungsbereich, wo die Faser mehr in Richtung der Lasteinleitung ausgerichtet ist als im Normalbereich, kann das Bauteil zusätzlich zu der durch die hinzugefügten zweiten Fasern erreichte Verstärkung noch weiter verstärkt werden. Fasern besitzen in Faserrichtung die höchste Festigkeit. Wird die Lasteinleitung durch eine Zugkraft bewirkt, so entspricht der zweite Faserwinkel im Verstärkungsbereich vorzugweise Winkeln im Bereich von 0 Grad zur Zugrichtung. Wird die Lasteinleitung durch eine Torsionskraft bewirkt, so sind zweite Faserwinkel im Bereich von 45 Grad zur Längsachse des Bauteils vorteilhaft. Dagegen ist beispielsweise für drehende (rotierende) Bauteile der Verstärkungsbereich mechanisch umso robuster gegenüber Lasteinleitungen, wenn der Faserwinkel einem 90 Gradwinkel zur Drehachse des Bauteils entspricht.

In einer Ausführungsform, bei der das Bauteil zur Verwendung als ein entlang einer Drehachse drehendes Bauteil vorgesehen ist und eine hohlzylindrische Form mit der Zylinderachse als Drehachse besitzt und wobei die Zylinderinnenseite zur Verbindung mit der oder den Kraftübertragungskomponenten vorgesehen ist, sind die ersten Fasern mit einem mittleren ersten Faserwinkel zur Drehachse des Bauteils und die zweiten Fasern mit einem mittleren zweiten Faserwinkel zur Drehachse des Bauteil angeordnet, wobei der zweite mittlere Faserwinkel größer als der erste mittlere Faserwinkel ist. Damit sind die zweiten Fasern im Verstärkungsbereich in Richtung der Krafteinleitung in das drehende Bauteil angeordnet und verstärken somit in Faserrichtung das Bauteil.

Die Erfindung bezieht sich des Weiteren auf einen Rotationskörper mit einem erfindungsgemäßen Bauteil zur Verwendung als ein entlang einer Drehachse drehendes Bauteil und einer oder mehrerer Kraftübertragungskomponenten, die innerhalb einer Verbindungsfläche mit dem Bauteil zur Krafteinleitung verbunden sind, wobei die Kraftübertragungskomponenten jeweils über eine Welle oder Zapfen in einem Lager geeignet gelagert sind und zumindest eine der Wellen oder Zapfen über einen Antrieb geeignet angetrieben werden kann. Die voranstehend beschriebenen Vorteile treffen gleichermaßen auch auf den entsprechend gestalteten Rotationskörper zu.

In einer Ausführungsform wird der Rotationskörper als Welle oder Felge zum Betreiben von Maschinen oder Komponenten, vorzugsweise als Schiffswelle, Antriebswelle, Motorwelle, Getriebewelle, Welle in einer Druckmaschine oder als Rotor zum Speichern von Energie verwendet. Die voranstehend beschriebenen drehenden Bauteile sind universell zu Zwecken aller Art einsetzbar. Der Fachmann kann den erfindungsgemäßen Rotationskörper im Rahmen der vorliegenden Erfindung auch in anderen Anwendungen einsetzen.

Die Erfindung betrifft des Weiteren ein Verfahren zur Herstellung eines erfindungsgemäßen Bauteils, umfassend die Schritte:
(a) Wickeln einer Faserlage aus ersten Fasern zumindest in einem Normalbereich auf einen Wickelkörper;
(b) Wickeln von zweiten Fasern in einem Verstärkungsbereich auf den Wickelkörper in derselben Faserlage neben den ersten Fasern im Normalbereich;
(c) Wickeln von weiteren Faserlagen aus ersten und zweiten Fasern durch Wiederholen der Verfahrensschritte (a) und (b), bis eine gewünschte Form des Bauteils gewickelt ist;
(d) Aushärten und/oder Abkühlen der Faserlagen und Entfernen des Wickelkörpers.

Die obige Reihenfolge der Verfahrensschritte entspricht dabei nicht einer zeitlichen Reihenfolge. Die Verfahrensschritte (a) und (b) können auch in umgekehrter Reihenfolge ausgeführt werden. Nach den Schritten (b) und/oder (c) kann in einer Ausführungsform zusätzlich ein Zwischenhärtungsschritt für die bereits gewickelten Faserlagen durchgeführt werden.

In einer Ausführungsform umfasst das Verfahren den weiteren Schritt, dass zwischen jeder Faserlage aus ersten und zweiten Fasern eine Faserlage nur aus ersten Fasern im gesamten Faserverbundbereich gewickelt wird, vorzugsweise wird die erste und letzte gewickelt Faserlage nur aus ersten Fasern im gesamten Faserverbundbereich gewickelt.

### Kurze Beschreibung der Abbildungen

Diese und andere Aspekte der Erfindung werden im Detail in den Abbildungen wie folgt gezeigt:
- Fig.1:: zwei Ausführungsformen des erfindungsgemäßen Bauteils;
- Fig.2:: Rotationskörper mit verstärktem Bauteil gemäß dem Stand der Technik;
- Fig.3:: eine Ausführungsform eines zylinderförmigen Rotationskörpers mit erfindungsgemäßem Bauteil in einem seitlichen Schnitt;
- Fig.4:: eine Ausführungsform der Faserlagen im Normal- und im Verstärkungsbereich eines erfindungsgemäßen Bauteils im seitlichen Schnitt;
- Fig.5:: eine Ausführungsform der Faserorientierung erster und zweiter Fasern im erfindungsgemäßen Bauteil in Draufsicht auf die Oberseite des Bauteils;
- Fig.6:: eine Ausführungsform der Faserlagen im Normal- und im Verstärkungsbereich eines erfindungsgemäßen Bauteils im seitlichen Schnitt.

### Detaillierte Beschreibung der Ausführungsbeispiele

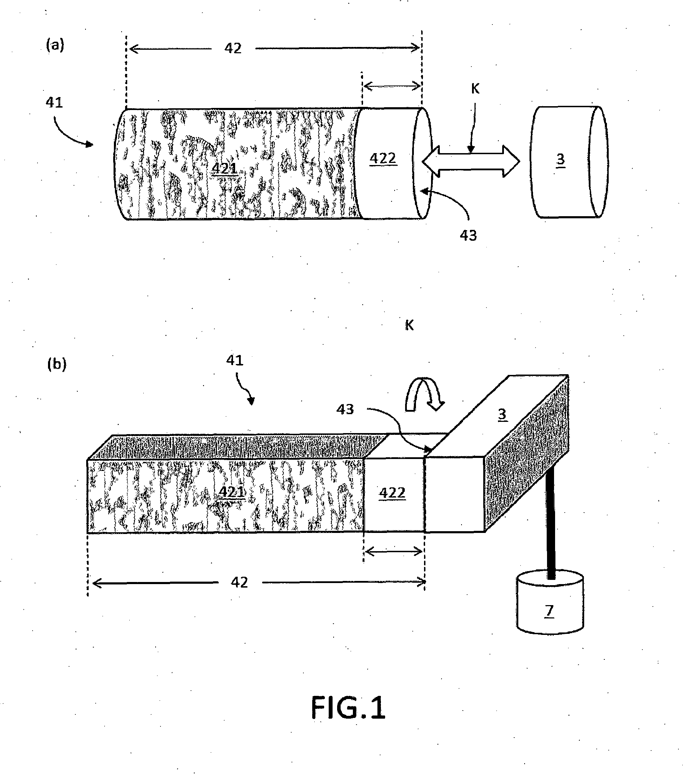

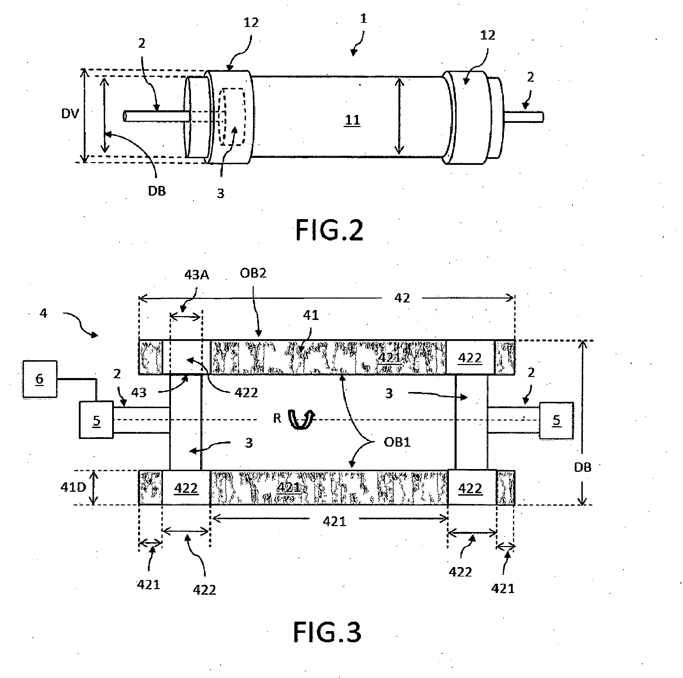

Fig.1 zeigt zwei erfindunsgemäße Bauteile 41 in perspektivischer Ansicht mit einem Faserverbundbereich 42 aus Faserverbundmaterialien, der einen Normalbereich 421 mit ein oder mehreren ersten Fasern F1 mit einer ersten mechanischen Belastbarkeit und einen Verstärkungsbereich 422 mit einer Verbindungsflächen 43 zur Verbindung mit einer Kraftübertragungskomponente 3 zur Krafteinleitung K in das Bauteils 41 umfasst, wobei der Verstärkungsbereich 422 zur Verstärkung eine oder mehrere zweite Fasern F2 mit einer gegenüber den ersten Fasern F1 höheren zweiten mechanischen Belastbarkeit umfasst. Die ersten und zweiten Fasern sind hier nicht im Detail gezeigt. Die gezeigten Bauteile 41 sind in dieser Ausführungsform vollständig aus Faserverbundmaterial hergestellt, da sich der Faserverbundbereich 42 über die gesamte Länge der Bauteile 41 erstreckt. In anderen Ausführungsformen kann der Faserverbundbereich 42 auch nur einen Teil des Bauteils ausmachen. Für die Faserlagen und Faserorientierungen in den in Fig.1 gezeigten Bauteile 41 wird auf die Figuren 3 bis 6 verwiesen. Die dort gezeigten Faseranordnungen, Faserlagen und Faserorientierungen können in den beispielhaft gezeigten Bauteilen 41 in Fig.1 entsprechend verwendet beziehungsweise angeordnet werden/sein. In Fig.1 (a) ist ein Bauteil 41 mit einem am Ende des Bauteils 41 angeordneten Verstärkungsbereich 422 mit einer kreisförmigen Verbindungsfläche 43 gezeigt. Die Kraftübertragungskomponente 3 übt hier eine Kraft K als Zug- oder Schiebekraft auf das Bauteil 41 aus. Die Zug- oder Schiebekraft K kann hier von der Kraftübertragungskomponente 3 beispielsweise mechanisch oder elektromagnetisch ausgeübt werden. Die Krafteinleitung geschieht über die Verbindungsfläche 43. Die eingeleitete Kraft K wird durch den Verstärkungsbereich 422 so aufgenommen, dass das Bauteil 41 die Belastung mittels der zweiten Fasern F2 im Verstärkungsbereich 422 auffangen kann und die weniger stark beanspruchten Teile des Bauteils 41 als Normalbereiche 421 mit ersten Fasern F1 ausgeführt werden können. Die zweiten Fasern F2 können hier in einer Ausführungsform in einem kleinen Winkel (Faserwinkel) zur Längsrichtung senkrecht zur Verbindungsfläche 43 des Bauteils 41 angeordnet sein, um die Verstärkung des Bauteils 41 im Verstärkungsbereich 422 noch zusätzlich zu ihren günstigen mechanischen Eigenschaften zu verstärken.

Fig.1 (b) zeigt eine andere Ausführungsform des erfindungsgemäßen Bauteils 41. Am Ende des beispielsweise quaderförmig ausgeführten Bauteils 41 ist ein Verstärkungsbereich 422 mit einer rechteckigen Verbindungsfläche 43 gezeigt. Die Kraftübertragungskomponente 3 ist hier statisch an der Verbindungsfläche 43 mit dem Bauteil 41 verbunden und übt hier eine Torsionskraft K (dargestellt durch den gebogenen Pfeil) auf das Bauteil 41 aus. Die Torsionkraft K an der Verbindungsfläche 43 wird hier beispielsweise mechanisch durch ein Gewicht 7, das am Ende der Kraftübertragungskomponente 3 befestigt ist, erzeugt. Die Krafteinleitung geschieht über die Verbindungsfläche 43. Die eingeleitete Kraft K wird durch den Verstärkungsbereich 422 so aufgenommen, dass das Bauteil 41 die Belastung mittels der zweiten Fasern F2 im Verstärkungsbereich 422 auffangen kann und die weniger stark beanspruchten Teile des Bauteils 41 als Normalbereiche 421 mit ersten Fasern F1 ausgeführt werden können. Die zweiten Fasern F2 können hier in einer Ausführungsform wegen der wirkenden Torsionskraft in einem Winkel von 45 Grad ± 5 Grad zur Längsrichtung senkrecht zur Verbindungsfläche 43 des Bauteils 41 angeordnet sein, um die Verstärkung des Bauteils 41 im Verstärkungsbereich 422 noch zusätzlich zu ihren günstigen mechanischen Eigenschaften zu verstärken.

Fig. 2 zeigt einen Rotationskörper 1 mit einem drehenden Bauteil 11 gemäß dem Stand der Technik, das zur Kompensation von Belastungen beim Beschleunigen, Abbremsen des Bauteils 11 oder Drehen des Bauteils 11 bei konstanter Drehzahl mittels einer auf die Antriebswelle 2 wirkenden Kraft von außen mit ringartigen äußeren Verstärkungen 12 verstärkt wurde. Die Antriebswelle 2 greift dabei über eine an der Innenseite des Bauteils befestigte Nabe 3 als Kraftübertragungskomponente auf das Bauteil 11 zu. Die Nabe 3 ist nur gestrichelt gezeigt, da sie in dieser perspektivischen Ansicht von dem Bauteil 11 verdeckt wird. Das Bauteil besitzt einen Durchmesser DB ohne äußere Verstärkungen. Wird das Bauteil in einer Maschine eingebaut, so muss um das Bauteil herum ein größeres Volumen freigehalten werden, da die äußeren Verstärkungen 12 den effektiven Durchmesser des Rotationskörpers 1 auf einen Durchmesser DV erhöhen. Somit kann das Bauteil 11 nicht so platzsparend in seiner Umgebung eingebaut werden, wie es ohne äußere Verstärkungen möglich wäre. Dennoch kann auf die äußeren Verstärkungen 12 nicht verzichtet werden, weil sonst die Belastungen, die über die Nabe 3 auf das Bauteil 11 wirken, zu Beschädigungen des Bauteils 11, beispielsweise Rissbildung im Bereich des Bauteils 11 um die Nabe 3 herum, führen würden. Sind die äußeren Verstärkungen 12 zudem aus Faserverbundmaterial gefertigt, so besteht die Gefahr, dass die äußeren Verstärkungen 12 im Betrieb ausfasern, was zu einer nachlassenden Verstärkung und einer entsprechend verminderten mechanischen Belastbarkeit des Bauteils 11 und einer Verschmutzung der Umgebung des Bauteils 11 mit losgelösten Fasern führen würde.

Fig. 3 zeigt dagegen eine Ausführungsform eines erfindungsgemäßen zylinderförmigen Rotationskörpers 4 mit erfindungsgemäßem Bauteil in dieser Ausführungsform als drehendes Bauteil in einem seitlichen Schnitt. Das Bauteil 41 umfasst eine in das vorgesehene Faserverbundmaterial integrierte Verstärkung in entsprechend ausgestalteten Verstärkungsbereichen 422. Der Rotationskörper 4 umfasst ein Bauteil 41 und zwei Kraftübertragungskomponenten 3, die jeweils innerhalb einer Verbindungsfläche 43 mit dem Bauteil 41 zur Variation der Rotationsenergie des Rotationskörpers 4 fest verbunden sind, wobei die Kraftübertragungskomponenten 3 jeweils über eine Welle 2 in einem Lager 5 geeignet gelagert sind und zumindest eine der Wellen 2 über einen Antrieb 6 geeignet angetrieben werden kann. Das Bauteil 41 besitzt in dieser Ausführungsform eine hohlzylindrische Form mit der Zylinderachse als Drehachse R, wobei die Zylinderinnenseite OB1 zur Verbindung mit den Kraftübertragungskomponenten 3 dient. Die Wandstärke 41 D des Bauteils 41 ist durch den Doppelpfeil schematisch angegeben und kann je nach Anwendung stark variieren. In anderen Ausführungsformen kann der Rotationskörper 4 auch eine sich durch den gesamten Bereich des zylinderförmigen Bauteils 41 erstreckende oder eine den gesamten vom Bauteil umschlossenen inneren Bereich ausfüllende Kraftübertragungskomponente 3 umfassen. Für diese Ausführungsformen gelten im Prinzip die gleichen Aussagen, nur dass die Verbindungsbereiche 43 entsprechend variieren und sich die in das Bauteil 41 eingekoppelten Kräfte entsprechend verteilen. Das Bauteil umfasst einen Faserverbundbereich 42 aus Faserverbundmaterialien, der ein oder mehrere Normalbereiche 421 mit ein oder mehreren ersten Fasern F1 mit einer ersten mechanischen Belastbarkeit und ein oder mehrere Verstärkungsbereiche 422, die zur Verbindung mit einer jeweiligen Kraftübertragungskomponente 3 zur Lasteinleitung in das Bauteil 41 vorgesehen sind und zur Verstärkung eine oder mehrere zweite Fasern F2 mit einer gegenüber den ersten Fasern F1 höheren zweiten mechanischen Belastbarkeit umfassen. In der hier gezeigten Ausführungsform ist das gesamte Bauteil 41 aus Faserverbundmaterial gefertigt. Die Verstärkungsbereiche 422 besitzen hier Ausdehnungen parallel zur Drehachse R, die über die Ausdehnung 43A der jeweiligen Verbindungsflächen 43 hinausgehen, innerhalb der die Kraftübertragungskomponente 3 mit dem Bauteil 41 verbunden ist. In dieser Ausführungsform sind die jeweiligen Kraftübertragungskomponente 3 scheibenförmig ausgeführt, so dass die Verbindungsfläche 43 in der zur Drehachse hinweisenden Oberfläche OB1 des Bauteils umläuft. Die Kraftübertragungskomponenten können aber auch speichenförmig ausgestaltet sein, so dass es pro Kraftübertragungskomponente 3 mehrere separate Verbindungsflächen 43 gibt. Die Anordnung der zweiten Fasern F2 ist im Verstärkungsbereich 422 dabei so gestaltet, dass vorzugsweise die geometrische Form des Faserverbundbereichs 42 im Verstärkungsbereich 422 nicht von der geometrischen Form des benachbarten Normalbereichs 421 abweicht, wobei der Verstärkungsbereich 422 dieselbe Dicke 41 D wie die jeweils angrenzenden Normalbereiche 421 besitzt. Die Oberfläche des Bauteils 41, die von der Drehachse wegweist, wird als Oberfläche OB2 bezeichnet. Der gezeigte Rotationskörper 4 kann beispielsweise als Welle oder Felge zum Betreiben von Maschinen oder Komponenten, vorzugsweise als Schiffswelle, Antriebswelle, Motorwelle, Getriebwelle, Welle in einer Druckmaschine oder als Rotor zum Speichern von Energie verwendet werden.

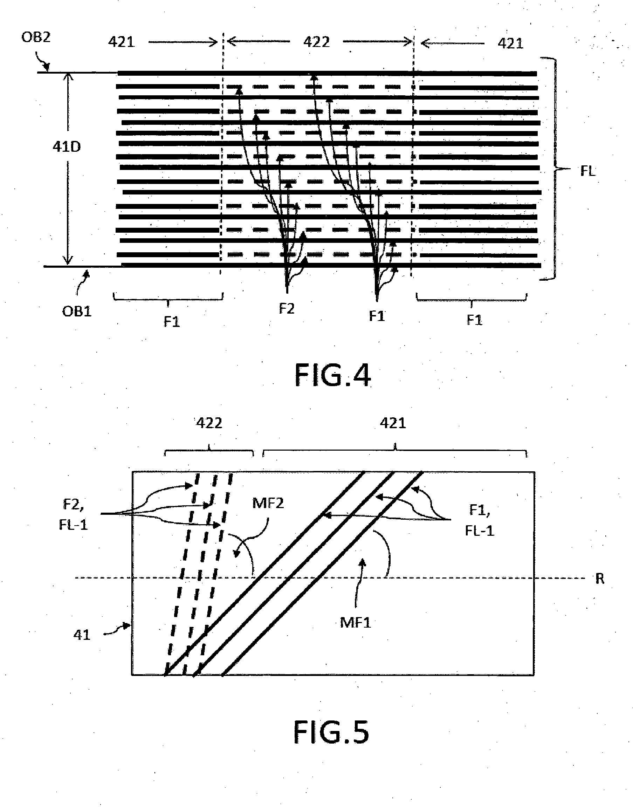

Fig. 4 zeigt eine Ausführungsform der Faserlagen FL im Normal- und im Verstärkungsbereich 421, 422 eines erfindungsgemäßen Bauteils 41, beispielsweise für statische oder dynamische Belastungen, im seitlichen Schnitt. Der Faserverbundbereich 42 umfasst in dieser Ausführungsform sowohl in den Normalbereichen 421 als auch in den Verstärkungsbereichen 422 mehreren Faserlagen FL aus übereinander gewickelten Fasern F1, F2, wobei die Faserlagen FL im Normalbereich 421 aus ersten Fasern F1 (hier als durchgezogene Linien dargestellt) und im Verstärkungsbereich 422 jeweils abwechselnd aus ersten Fasern F1 und zweiten Fasern F2 (hier als gestrichelte Linien dargestellt) bestehen. Die hier gezeigte Anzahl an Faserlagen FL dient nur der Veranschaulichung der Faserlagenstruktur. In den meisten Bauteilen 41 wird die Anzahl der Faserlagen FL wesentlich größer sein als hier abgebildet. Durch die integrierte Anordnung der zweiten Faser F2 im Verstärkungsbereich 422 in die bestehende Faserlagenstruktur der Normalbereiche 421 weicht die geometrische Form des Faserverbundbereichs 42 im Verstärkungsbereich 422 idealerweise nicht von der geometrischen Form des benachbarten Normalbereichs 421 ab. Insbesondere besitzt der Verstärkungsbereich 422 dieselbe Dicke 41 D wie die angrenzenden Normalbereiche 421. Somit kann das erfindungsgemäße Bauteil 41 bei hervorragender Robustheit gegenüber mechanischen Belastungen sehr platzsparend in die entsprechende Maschinenumgebung eingebaut werden. In dieser Ausführungsform sind außerdem an den Oberflächen des Bauteils 41, die zu der Verbindungsfläche hinweisen OB1 und/oder wegweisen OB2, im Verstärkungsbereich 422 erste Fasern F1 angeordnet. Somit besitzt das Bauteil 41 über die gesamten Oberflächen OB1 und OB2 hinweg die gleichen Oberflächeneigenschaften. Insofern werden die Anwendungseigenschaften des Bauteils 41 nicht von der Positionierung der Verstärkungsbereiche 422 beeinflusst. Dadurch wird der Verbund zwischen den Normalbereichen 421 und den Verstärkungsbereichen 422 deutlich erhöht, da jede zweite Faserlage FL aus ersten Fasern F1 besteht, die als durchgehende Faserlage FL gewickelt ist und somit einen starken Verbund mit den sich dazwischen befindlichen zweiten Fasern F2 im Verstärkungsbereich 422 herstellt. Die auf diese Weise integrierte Verstärkung reduziert die zu Delaminationen eventuell führenden Eigenspannungen im Bauteil 41.

Fig. 5 zeigt eine Ausführungsform der Faserorientierung erster und zweiter Fasern F1, F2 im erfindungsgemäßen Bauteil 41 in Draufsicht auf die Oberseite OB2 des Bauteils 41. Die ersten Fasern F1 sind dabei mit einem mittleren ersten Faserwinkel MF1 zur Drehachse R (gestrichelt dargestellt) des in dieser Ausführungsform als drehendes Bauteil 41 verwendeten Bauteils 41 und die zweiten Fasern F2 mit einem mittleren zweiten Faserwinkel MF2 zur Drehachse R des drehenden Bauteils 41 angeordnet, wobei der zweite mittlere Faserwinkel MF2 größer als der erste mittlere Faserwinkel MF1 ist. Die mittleren Faserwinkel MF1, MF2 stellen dabei den Winkel zwischen den auf die Drehachse R projizierten Faserorientierungen und der Drehachse R dar, da die Fasern F1, F2 die Drehachse R nie real schneiden, da die Drehachse R zentral durch das Bauteil 41 hindurch verläuft, während die Fasern F1, F2 den um die Drehachse R umlaufenden Mantel des Bauteils 41 mit einer Wandstärke 41 D darstellen. Der Faserwinkel kann dabei je nach Anwendung deutlich variieren. In Ausführungsformen, wo beispielsweise die mittleren Faserwinkel MF1, MF2 von ersten und zweiten Faser F1, F2 gleich sind, wird die Verstärkung durch die Fasereigenschaften der zweiten Faser F2 relativ zur ersten Faser F1 bestimmt. In Ausführungsformen, bei denen die mittleren Faserwinkel MF1, MF2 unterschiedlich sind, liefert der Faserwinkelunterschied einen zusätzlichen Beitrag zum Grad der Verstärkung in den Verstärkungsbereichen 422. Durch die günstige Gestaltung des Faserwinkels MF2 im Verstärkungsbereich 422 kann das Bauteil 41 zusätzlich zu der durch die hinzugefügten zweiten Fasern F2 erreichte Verstärkung noch weiter verstärkt werden. Fasern besitzen in Faserrichtung die höchste Festigkeit. Somit ist der Verstärkungsbereich 422 mechanisch umso robuster gegenüber Belastungen, je näher der Faserwinkel MF2 einem 90 Gradwinkel zur Drehachse R entspricht. Für nicht-drehende Bauteile 41 sind in einer anderen Ausführungsform die ersten Fasern F1 mit einem mittleren ersten Faserwinkel MF1 zur Richtung der Krafteinleitung in das Bauteils 41 und die zweiten Fasern F2 mit einem mittleren zweiten Faserwinkel MF2 zur Richtung der Krafteinleitung in das Bauteil 41 angeordnet, wobei der zweite mittlere Faserwinkel MF2 kleiner als der erste mittlere Faserwinkel MF1 ist.

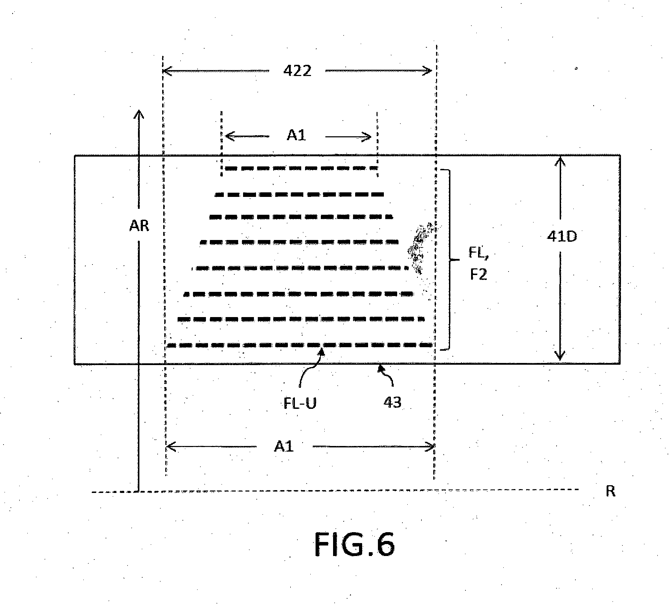

Fig. 6 zeigt eine weitere zu Figur 4 alternative Ausführungsform der Faserlagen FL im Normal- und im Verstärkungsbereich 421, 422 eines erfindungsgemäßen Bauteils 41 im seitlichen Schnitt. Hier besitzen die Faserlagen FL aus zweiten Fasern F2 eine jeweilige erste Ausdehnung A1 parallel zur Verbindungsfläche 43 oder zur Drehachse R des Bauteils 41, wobei sich die ersten Ausdehungen A1 mit wachsendem Abstand AR der jeweiligen Faserlagen FL zur Verbindungsfläche 43 oder zur Drehachse R verringern. Hierbei sind die Faserlagen FL der zweiten Fasern F2 im seitlichen Schnitt des Verstärkungsbereichs 422 in einer trapezartigen Form übereinander angeordnet, wobei die unterste Faserlage FL-U der zweiten Fasern F2 die größte erste Ausdehung A1 besitzt. Die Faserlage des Verstärkungsbereichs 422 in der Nähe der Verbindungsfläche 43 zur Kraftübertragungskomponente 3 muss die größten Kräfte auf das Bauteil 41 auffangen. Daher ist es zweckmäßig, die Ausdehnung diese Faserlage FL-U möglichst groß zu wählen. Mit steigendem Abstand AR zur Verbindungsfläche 43 nimmt die in die jeweiligen Faserlagen FL eingekoppelte Kraft ab, so dass die erste Ausdehnung A1 der Faserlagen FL mit zweiten Fasern F2 mit wachsendem Abstand AR abnehmen kann und gleichzeitig die auftretenden Belastungen weiterhin vom verstärkten Bauteil 41 kompensiert werden können. Diese in Figur 5 gezeigte spezielle verjüngende Trapezform verleiht dem Bauteil 41 weiterhin eine große Robustheit gegenüber Belastungen, wobei der Materialeinsatz höherwertiger zweiter Fasern F2 deutlich verringert werden kann. Die Steilheit der Trapezform an den sich verjüngenden Schenkeln kann auf die jeweilige Anwendung angepasst werden. Durch die sich verkleinernden ersten Ausdehnungen A1 wird zudem der Verbund mit den ersten Fasern F1 der überlagernden nächsten Faserlage FL noch weiter verstärkt.

Die hier gezeigten Ausführungsformen stellen nur Beispiele für die vorliegende Erfindung dar und dürfen daher nicht einschränkend verstanden werden.

### Liste der Bezugszeichen

- 1: Rotationskörper gemäß dem Stand der Technik
- 11: Bauteil gemäß dem Stand der Technik
- 12: äußere Verstärkung des Bauteils gemäß dem Stand der Technik
- 2: (Antriebs-) Welle oder Zapfen
- 3: Kraftübertragungskomponente (beispielsweise Nabe)
- 4: erfindungsgemäßer Rotationskörper
- 41: erfindungsgemäßes Bauteil
- 41D: Wandstärke des Bauteils
- 42: Faserverbundbereich
- 421: Normalbereich im Faserverbundbereich
- 422: Verstärkungsbereich im Faserverbundbereich
- 43: Verbindungsfläche zwischen Kraftübertragungskomponente und Bauteil
- 43A: Ausdehnung der Verbindungsfläche parallel zur Drehachse
- 5: Lager der Welle
- 6: Antrieb zum Antreiben der Welle
- 7: Gewicht

- A1: erste Ausdehunungen der Faserlagen mit zweiten Fasern parallel zur Drehachse
- AR: Abstand zur Drehachse
- DB: Durchmesser des Bauteils
- DV: Durchmesser des Bauteils mit äußerer Verstärkung
- F1: erste Faser
- F2: zweite Faser
- FL: Faserlage(n)
- FL-U: unterste Faserlage der zweiten Fasern
- K: auf das Bauteil wirkende Kraft (Krafteinleitung)
- MF1: mittlerer erster Faserwinkel der ersten Fasern
- MF2: mittlerer zweiter Faserwinkel der zweiten Fasern
- OB1: zur Drehachse hinweisende Oberfläche des Bauteils, Zylinderinnenseite
- OB2: von der Drehachse wegweisende Oberfläche des Bauteils
- R: Rotationsachse

## Patentansprüche

1. Ein Bauteil (41) mit einem Faserverbundbereich (42) aus Faserverbundmaterialien, der ein oder mehrere Normalbereiche (421) mit ein oder mehreren ersten Fasern (F1) mit einer ersten mechanischen Belastbarkeit und ein oder mehrere Verstärkungsbereiche (422) mit einer oder mehreren Verbindungsflächen (43) umfasst, die zur Verbindung mit einer jeweiligen Kraftübertragungskomponente (3) zur Krafteinleitung in das Bauteils (41) vorgesehen sind und die Verstärkungsbereiche (422) zur Verstärkung eine oder mehrere zweite Fasern (F2) mit einer gegenüber den ersten Fasern (F1) höheren zweiten mechanischen Belastbarkeit umfassen
**dadurch gekennzeichnet,**
**dass** der Faserverbundbereich mehrere Faserlagen aus den ersten und zweiten Fasern (F1, F2) umfasst, wobei in derselben Faserlage (FL) erste Fasern (F1) zumindest in dem Normalbereich (421) und zweite Fasern (F2) in dem Verstärkungsbereich (422) neben den ersten Fasern (F1) gewickelt sind.

2. Das Bauteil (41) nach Anspruch 1,
**dadurch gekennzeichnet,**
**dass** der Verstärkungsbereich (422) eine Ausdehnung besitzt, die über eine Ausdehnung (43A) der Verbindungsfläche (43) hinausgeht, innerhalb der die Kraftübertragungskomponente (3) mit dem Bauteil (41) verbunden ist.

3. Das Bauteil (41) nach Anspruch 1 oder 2,
**dadurch gekennzeichnet,**
**dass** der Faserverbundbereich (42) mehrere Faserlagen (FL) aus übereinander gewickelten Fasern (F1, F2) umfasst, wobei die Faserlagen (FL) im Normalbereich (421) aus ersten Fasern (F1) und im Verstärkungsbereich (422) jeweils abwechselnd aus ersten und zweiten Fasern (F1, F2) bestehen.

4. Das Bauteil (41) nach Anspruch 3,
**dadurch gekennzeichnet,**
**dass** die Faserlagen (FL) aus zweiten Fasern (F2) eine jeweilige erste Ausdehnung (A1) parallel zur Verbindungsfläche (43) des Bauteils (41) besitzen, wobei sich die ersten Ausdehnungen (A1) mit wachsendem Abstand (AR) der jeweiligen Faserlagen (FL) zur Verbindungsfläche (43) verringern.

5. Das Bauteil (41) nach einem der voranstehenden Ansprüche,
**dadurch gekennzeichnet,**
**dass** die Anordnung der zweiten Fasern (F2) im Verstärkungsbereich (422) so gestaltet ist, dass die geometrische Form des Faserverbundbereichs (42) im Verstärkungsbereich (422) nicht von der geometrischen Form des benachbarten Normalbereichs (421) abweicht, wobei der Verstärkungsbereich (422) vorzugsweise dieselbe Dicke (41 D) wie der oder die angrenzenden Normalbereiche (421) besitzt.

6. Das Bauteil (41) nach einem der voranstehenden Ansprüche,
**dadurch gekennzeichnet,**
**dass** zumindest an den Oberflächen des Bauteils (41), die zu der Verbindungsfläche (43) hinweisen (OB1) und/oder wegweisen (OB2), im Verstärkungsbereich (422) erste Fasern (F1) angeordnet sind.

7. Das Bauteil (41) nach einem der voranstehenden Ansprüche,
**dadurch gekennzeichnet,**
**dass** die ersten Fasern (F1) mit einem mittleren ersten Faserwinkel (MF1) zwischen der Richtung der Krafteinleitung (K) in das Bauteils (41) und einer Faserausrichtung der ersten Fasern (F1) und die zweiten Fasern (F2) mit einem mittleren zweiten Faserwinkel (MF2) zwischen der Richtung der Krafteinleitung (K) in das Bauteils (41) und einer Faserausrichtung der zweiten Fasern (F1) angeordnet sind, wobei der zweite mittlere Faserwinkel (MF2) kleiner als der erste mittlere Faserwinkel (MF1) ist.

8. Das Bauteil (41) nach einem der voranstehenden Ansprüche,
**dadurch gekennzeichnet,**
**dass** erste und zweite Fasern (F1, F2) ein oder mehrere Elemente aus der Gruppe Naturfasern, synthetische Fasern, keramische Fasern, Glasfasern, Kohlenstofffasern, belastbarere Kohlenstofffasern sind.

9. Das Bauteil (41) nach einem der voranstehenden Ansprüche,
**dadurch gekennzeichnet,**
**dass** das Bauteil (41) vollständig aus Faserverbundmaterial hergestellt ist.

10. Das Bauteil (41) nach Anspruch 1,
**dadurch gekennzeichnet,**
**dass** das Bauteil (41) zur Verwendung als ein entlang einer Drehachse (R) drehendes Bauteil (41) vorgesehen ist und eine hohlzylindrische Form mit der Zylinderachse als Drehachse (R) besitzt, wobei die Zylinderinnenseite (OB1) zur Verbindung mit der oder den Kraftübertragungskomponenten (3) vorgesehen ist.

11. Das Bauteil (41) nach Anspruch 10,
**dadurch gekennzeichnet,**
**dass** die ersten Fasern (F1) mit einem mittleren ersten Faserwinkel (MF1) zwischen der auf die Drehachse projizierten Faserorientierung der ersten Faser und der Drehachse (R) des Bauteils (41) und die zweiten Fasern (F2) mit einem mittleren zweiten Faserwinkel (MF2) zwischen der auf die Drehachse projizierten Faserorientierung der zweiten Faser und der Drehachse (R) des Bauteil (41) angeordnet sind, wobei der zweite mittlere Faserwinkel (MF2) größer als der erste mittlere Faserwinkel (MF1) ist.

12. Ein Rotationskörper (4) mit einem Bauteil (41) nach Anspruch 10 und einer oder mehrerer Kraftübertragungskomponenten (3), die innerhalb einer Verbindungsfläche (43) mit dem Bauteil (41) zur Krafteinleitung in den Rotationskörper (4) verbunden sind, wobei die Kraftübertragungskomponenten (3) jeweils über eine Welle oder Zapfen (2) in einem Lager (5) geeignet gelagert sind und zumindest eine der Wellen oder Zapfen (2) über einen Antrieb (6) geeignet angetrieben werden kann.

13. Der Rotationskörper (4) nach Anspruch 12,
**dadurch gekennzeichnet,**
**dass** der Rotationskörper (4) als Welle oder Felge zum Betreiben von Maschinen oder Komponenten, vorzugsweise als Schiffswelle, Antriebswelle, Motorwelle, Getriebewelle, Welle in einer Druckmaschine oder als Rotor zum Speichern von Energie, verwendet wird.

14. Verfahren zur Herstellung eines Bauteils (41) nach Anspruch 1, umfassend die Schritte
(a) Wickeln einer Faserlage (FL) aus ersten Fasern (F1) zumindest in einem Normalbereich (421) auf einen Wickelkörper;
(b) Wickeln von zweiten Fasern (F2) in einem Verstärkungsbereich (422) auf den Wickelkörper in derselben Faserlage (FL) neben den ersten Fasern (F1) im Normalbereich (421);
(c) Wickeln von weiteren Faserlagen (FL) aus ersten und zweiten Fasern (F1, F2) durch Wiederholen der Verfahrensschritte (a) und (b), bis eine gewünschte Form des Bauteils gewickelt ist;
(d) Aushärten und/oder Abkühlen der Faserlagen und Entfernen des Wickelkörpers.

15. Das Verfahren nach Anspruch 14,
umfassend den weiteren Schritt, dass zwischen jeder Faserlage (FL) aus ersten und zweiten Fasern (F1, F2) eine Faserlage (FL) nur aus ersten Fasern (F1) im gesamten Faserverbundbereich (42) gewickelt wird, vorzugsweise wird die erste und letzte gewickelt Faserlage (FL) nur aus ersten Fasern (F1) im gesamten Faserverbundbereich (42) gewickelt.

## Claims

1. A component (41) with a fiber-reinforced composite area (42) made of fiber-reinforced composite materials comprising one or more normal areas (421) with one or more first fibers (F1) having a first mechanical strength and one or more reinforcement areas (422) with one or more connection surfaces (43) that are provided for connection to an appertaining force-transmission component (3) in order to introduce a force into the component (41), and, for reinforcement purposes, the reinforcement areas (422) comprise one or more second fibers (F2) that have a second mechanical strength that is higher than that of the first fibers (F1),
**characterized in that**
the fiber-reinforced composite area has several fiber layers consisting of first and second fibers (F1, F2), whereby, in the same fiber layer (FL), first fibers (F1) are wound at least in the normal area (421) and second fibers (F2) are wound in the reinforcement area (422) next to the first fibers (F1).

2. The component (41) according to claim 1,
**characterized in that**
the reinforcement area (422) has an extension that goes beyond the extension (43A) of the connection surface (43) within which the force-transmission component (3) is connected to the component (41).

3. The component (41) according to claim 1 or 2,
**characterized in that**
the fiber-reinforced composite area (42) comprises several fiber layers (FL) consisting of fibers (F1, F2) wound over each other, whereby, in the normal area (421), the fiber layers (FL) consist of first fibers (F1), while in the reinforcement area (422), the fiber layers (FL) each alternately consist of first and second fibers (F1, F2).

4. The component (41) according to claim 3,
**characterized in that**
the fiber layers (FL) consisting of second fibers (F2) each have a first extension (A1) parallel to the connection surface (43) of the component (41), whereby the first extensions (A1) diminish as the distance (AR) from the individual fiber layers (FL) to the connection surface (43) increases.

5. The component (41) according to one of the preceding claims,
**characterized in that**
the arrangement of the second fibers (F2) in the reinforcement area (422) is configured in such a way that the geometric shape of the fiber-reinforced composite area (42) in the reinforcement area (422) does not differ from the geometric shape of the adjacent normal area (421), whereby the reinforcement area (422) preferably has the same thickness (41 D) as the adjacent normal area(s) (421).

6. The component (41) according to one of the preceding claims,
**characterized in that**
first fibers (F1) are arranged in the reinforcement area (422), at least on the surfaces of the component (41) facing (OB1) and/or facing away from (OB2) the connection surface (43).

7. The component (41) according to one of the preceding claims,
**characterized in that**
the first fibers (F1) are arranged at a first mean fiber angle (MF1) that lies between the direction of the introduction of force (K) into the component (41) and a fiber orientation of the first fibers (F1), while the second fibers (F2) are arranged at a second mean fiber angle (MF2) that lies between the direction of the introduction of force (K) into the component (41) and a fiber orientation of the second fibers (F2), whereby the second mean fiber angle (MF2) is smaller than the first mean fiber angle (MF1).

8. The component (41) according to one of the preceding claims,
**characterized in that**
the first and second fibers (F1, F2) comprise one or more elements belonging to the group of natural fibers, synthetic fibers, ceramic fibers, glass fibers, carbon fibers, or high-strength carbon fibers.

9. The component (41) according to one of the preceding claims,
**characterized in that**
the component (41) is completely made of a fiber-reinforced composite material.

10. The component (41) according to claim 1,
**characterized in that**
the component (41) is provided for use as a component (41) that rotates around an axis of rotation (R) and that has a hollow-cylindrical shape, with the cylindrical axis as the axis of rotation (R), whereby the inside of the cylinder (OB1) is provided for purposes of connection to the force-transmission component(s) (3).

11. The component (41) according to claim 10,
**characterized in that**
the first fibers (F1) are arranged at a first mean fiber angle (MF1) that lies between the fiber orientation of the first fibers projected onto the axis of rotation and the axis of rotation (R) of the component (41), while the second fibers (F2) are arranged at a second mean fiber angle (MF2) that lies between the fiber orientation of the second fibers projected onto the axis of rotation and the axis of rotation (R) of the component (41), whereby the second mean fiber angle (MF2) is larger than the first mean fiber angle (MF1).

12. A body of rotation (4) having a component (41) according to claim 10 and one or more force-transmission components (3) that are connected within a connection surface (43) to the component (41) in order to introduce a force into the body of rotation (4), whereby the force-transmission components (3) are each appropriately supported via a shaft or journal (2) in a bearing (5) and at least one of the shafts or journals (2) can be appropriately driven by means of a drive (6).

13. The body of rotation (4) according to claim 12,
**characterized in that**
the body of rotation (4) is used as a shaft or rim in order to operate machines or components, preferably as a ship's shaft, a drive shaft, a motor shaft, a gear shaft, a shaft in a printing machine, or as a rotor to store energy.

14. A method for the production of a component (41) according to claim 1, comprising the following steps:
(a) a fiber layer (FL) consisting of first fibers (F1) is wound onto a winding core at least in a normal area (421);
(b) in a reinforcement area (422), second fibers (F2) are wound onto the winding core in the same fiber layer (FL) next to the first fibers (F1) in the normal area (421);
(c) additional fiber layers (FL) consisting of first and second fibers (F1, F2) are wound by repeating the method steps (a) and (b) until the desired shape of the component has been wound;
(d) the fiber layers are cured and/or cooled and the winding core is removed.

15. The method according to claim 14,
comprising the additional step that, between each fiber layer (FL) consisting of first and second fibers (F1, F2), a fiber layer (FL) consisting only of first fibers (F1) is wound in the entire fiber-reinforced composite area (42), preferably the first and last wound fiber layers (FL) that are wound consist only of first fibers (F1) in the entire fiber-reinforced composite area (42).

## Revendications

1. Composant (41) comportant une zone composite fibreuse (42) en matériaux composites fibreux, laquelle inclut une ou plusieurs zones normales (421) comportant une ou plusieurs premières fibres (F1) ayant une première résistance mécanique et une ou plusieurs zones de renforcement (422) présentant une ou plusieurs surfaces de liaison (43) prévues pour être reliées à un composant respectif de transmission de force (3) pour introduction de la force dans le composant (41), et les zones de renforcement (42) comprenant, aux fins du renforcement, une ou plusieurs deuxièmes fibres (F2) ayant une deuxième résistance mécanique supérieure en comparaison avec les premières fibres (F1),
**caractérisé en ce que**
la zone composite fibreuse comprend plusieurs couches fibreuses composées des premières et des deuxièmes fibres (F1, F2), dans une même couche fibreuse (FL) étant enroulées des premières fibres (F1) au moins dans la zone normale (421) et des deuxièmes fibres (F2) dans la zone de renforcement (422) à côté des premières fibres (F1).

2. Composant (41) selon la revendication 1, **caractérisé en ce que** la zone de renforcement (422) présente une étendue qui va au-delà d'une étendue (43A) de la surface de liaison (43) dans les limites de laquelle le composant de transmission de force (3) est relié au composant (41).

3. Composant (41) selon la revendication 1 ou 2, **caractérisé en ce que** la zone composite fibreuse (42) comprend plusieurs couches fibreuses (FL) composées de fibres enroulées les unes au-dessus des autres (F1, F2), les couches fibreuses (FL) étant composées de premières fibres (F1) dans la zone normale (421) et de premières et de deuxièmes fibres (F1, F2) respectivement en alternance dans la zone de renforcement (422).

4. Composant (41) selon la revendication 3, **caractérisé en ce que** les couches fibreuses (FL) composées de deuxièmes fibres (F2) présentent une première étendue respective (A1) parallèlement à la surface de liaison (43) du composant (41), les premières étendues (A1) se réduisant à mesure que la distance (AR) entre les couches fibreuses respectives (FL) et la surface de liaison (43) augmente.

5. Composant (41) selon l'une des revendications précédentes, **caractérisé en ce que** l'agencement des deuxièmes fibres (F2) dans la zone de renforcement (422) est réalisé de telle sorte que la forme géométrique de la zone composite fibreuse (42) dans la zone de renforcement (422) ne s'écarte pas de la forme géométrique de la zone normale voisine (421), la zone de renforcement (422) présentant de préférence la même épaisseur (41 D) que la ou les zones normales adjacentes (421).

6. Composant (41) selon l'une des revendications précédentes, **caractérisé en ce que** des premières fibres (F1) sont agencées, dans la zone de renforcement (422), au moins sur les surfaces du composant (41) qui sont tournées (OB1) vers la surface de liaison (43) ou qui y sont opposées (OB2).

7. Composant (41) selon l'une des revendications précédentes, **caractérisé en ce que** les premières fibres (F1) sont agencées avec un premier angle moyen (MF1) des fibres entre la direction de l'introduction de la force (K) dans le composant (41) et une orientation des premières fibres (F1), et les deuxièmes fibres (F2), avec un deuxième angle moyen (MF2) des fibres entre la direction de l'introduction de la force (K) dans le composant (41) et une orientation des deuxièmes fibres (F2), le deuxième angle moyen (MF2) des fibres étant inférieur au premier angle moyen (MF1) des fibres.

8. Composant (41) selon l'une des revendications précédentes, **caractérisé en ce que** des premières et deuxièmes fibres (F1, F2) sont un ou plusieurs éléments du groupe des fibres naturelles, des fibres synthétiques, des fibres céramiques, des fibres de verre, des fibres de carbone, des fibres de carbone haute résistance.

9. Composant (41) selon l'une des revendications précédentes, **caractérisé en ce que** le composant (41) est fabriqué entièrement en matière composite fibreuse.

10. Composant (41) selon la revendication 1, **caractérisé en ce que** le composant (41) est prévu pour être utilisé en tant que composant (41) rotatif le long d'un axe de rotation (R) et présente une forme cylindrique creuse ayant l'axe du cylindre comme axe de rotation (R ), la face intérieure du cylindre (OB1) étant prévue pour être reliée au(x) composant(s) de transmission de force (3).

11. Composant (41) selon la revendication (10), **caractérisé en ce que** les premières fibres (F1) sont agencées avec un premier angle moyen (MF1) des fibres entre l'orientation de la première fibre projetée sur l'axe de rotation et l'axe de rotation (R) du composant (41), et les deuxièmes fibres (F2), avec un deuxième angle moyen (MF2) des fibres entre l'orientation de la deuxième fibre projetée sur l'axe de rotation et l'axe de rotation (R) du composant (41), le deuxième angle moyen (MF2) des fibres étant supérieur au premier angle moyen (MF1) des fibres.

12. Corps rotatif (4) comportant un composant (41) selon la revendication 10 et un ou plusieurs composants de transmission de force (3) qui sont reliés au composant (41) dans les limites d'une surface de liaison (43) afin d'introduire la force dans le corps rotatif (4), les composants de transmission de force (3) étant respectivement logés de manière appropriée dans un palier (5) par l'intermédiaire d'un arbre ou tourillon (2) et au moins l'un des arbres ou tourillons (2) pouvant être entraîné de manière appropriée par l'intermédiaire d'un entraînement (6).

13. Corps rotatif (4) selon la revendication 12, **caractérisé en ce que** le corps rotatif (4) est utilisé comme arbre ou jante pour faire fonctionner des machines ou des composants, de préférence comme arbre de navire, arbre d'entraînement, arbre de moteur, arbre de transmission, arbre dans une imprimante ou comme rotor pour le stockage d'énergie.

14. Procédé de fabrication d'un composant (41) selon la revendication 1, comportant les étapes suivantes :
(a) enroulement d'une couche fibreuse (FL) composée de premières fibres (F1) au moins dans une zone normale (421) sur un corps d'enroulement ;
(b) enroulement de deuxièmes fibres (F2) dans une zone de renforcement (422) sur le corps d'enroulement dans la même couche fibreuse (FL) à côté des premières fibres (F1) dans la zone normale (421) ;
(c) enroulement d'autres couches fibreuses (FL) composées de premières et de deuxièmes fibres (F1, F2) par répétition des étapes (a) et (b) jusqu'à enroulement d'une forme souhaitée du composant ;
(d) durcissement et/ou refroidissement des couches fibreuses et retrait du c orps d'enroulement.

15. Procédé selon la revendication 14, comprenant l'étape supplémentaire d'enroulement, entre chaque couche fibreuse (FL) composée de premières et de deuxièmes fibres (F1, F2), d'une couche fibreuse (FL) composée uniquement de premières fibres (F1) dans l'ensemble de la zone composite fibreuse (42), la première et la dernière couche fibreuse enroulée (FL) étant enroulées de préférence uniquement à partir de premières fibres (F1) dans l'ensemble de la zone composite fibreuse (42).
